# EUROPEAN PATENT SPECIFICATION

(11) **EP 1 582 631 B1**
(45) Date of publication and mention of the grant of the patent: **31.01.2007**
(21) Application number: 04076062.1
(22) Date of filing: 02.04.2004
(51) Int. Cl.: E02B 7/28, E02B 8/04

(54) **Device for shutting off or regulating a medium flow**
Vorrichtung um die Strömung eines Durchflussmediums zu sperren oder zu regeln
Dispositif d'arrêt ou de régulation d'un flux de matière

(43) Date of publication of application: 05.10.2005
(73) Proprietor: KWT Holding B.V., 8256 SN Biddinghuizen (NL)
(72) Inventor: Boers, Hendrik Albertus, 8256 RS Biddinguizen (NL)
(74) Representative: Winckels, Johannes Hubertus F.

(56) References cited:
- DE-U- 29 703 184
- US-A- 3 953 978
- US-A- 4 726 709
- US-A- 4 848 962

## Description

The invention relates to a device for shutting off or regulating a medium flow according to the preamble of claim 1.

Such a device is known from practice in the design of a shutoff and an overflow slide, see for example DE 29703184 U, and is provided with costly guides to guide the sliding plate when setting it in different positions, for instance when setting it from the open position into a closed position and vice versa. These guides are to be mounted on the wall which includes the passage opening that is to be closed or cleared, or regulated, by means of the shutoff or overflow slide. For many applications, certainly those where the pressure that is exerted by the water or like medium on the sliding plate is relatively low, a much simpler and hence much less costly construction of the device could suffice.

The objective problem of the invention is to provide such a much less costly device, which moreover is readily mountable.

The solution to this problem is provided by the device of the type described in the opening paragraph wherein, to the end that the mounting plate further serves for guiding the sliding plate, the sliding plate is U-shaped at two opposite, first longitudinal edges with the two U-shaped parts embracing the corresponding longitudinal edges of the mounting plate.

As the mounting plate at the same time constitutes the guide of the sliding plate, the main parts of a device are provided in a very efficient manner with just two relatively inexpensive parts. Moreover, the U-shaped longitudinal edges impart strength to the sliding plate which, incidentally, can be formed from a simple plate.

Preferably, the U-shaped parts are formed with the aid of a flanging operation. However, the U-shaped parts can also be formed in a manner other than through a flanging operation. Thus, the U-shaped edges can, for instance, be provided by fastening a U-section adjacent the edges of the plate.

In order to further enhance strength, it is particularly favorable, according to a further elaboration of the invention, when also the other two opposed, second longitudinal edges of the sliding plate are U-shaped, with the U-shaped parts of the first longitudinal edges being situated on a first main side of the sliding plate and the U-shaped parts of the second longitudinal edges being situated on a second main side of the sliding plate, opposite the first main side.

Not only does this impart enhanced strength to the sliding plate, but also one of the U-shaped second longitudinal edges can serve for mounting the adjusting mechanism thereon, which adjusting mechanism has another end connected with the fixed world.

Further elaborations of the invention are described in the dependent claims and will hereinafter be further clarified on the basis of an exemplary embodiment, with reference to the drawing.
Fig. 1 shows a perspective view of an exemplary embodiment of the device in the form of a shutoff;
Fig. 2 shows a front view of the shutoff represented in Fig. 1;
Fig. 3 shows a top plan view of the shutoff represented in Fig. 1;
Fig. 4 shows a cross-sectional view along line IV-IV from Fig. 2;
Fig. 5 shows a first detail 1 from Fig.4;
Fig. 6 shows a second detail 2 from Fig.4;
Fig. 7 shows a third detail 3 from Fig. 4;
Fig. 8 shows a cross-sectional view along line VIII-VIII from Fig. 2; and
Fig. 9 shows the detail indicated in Fig. 8.

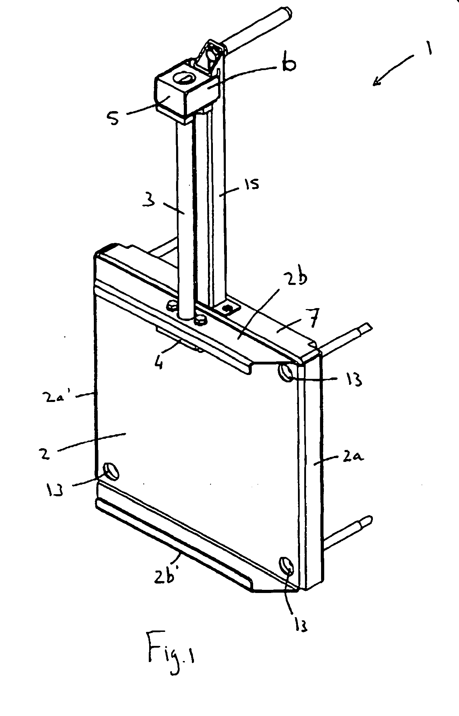

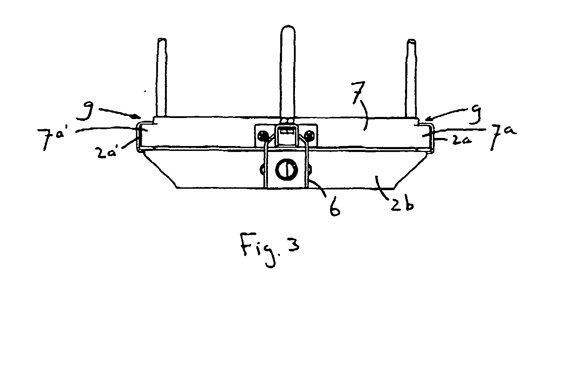

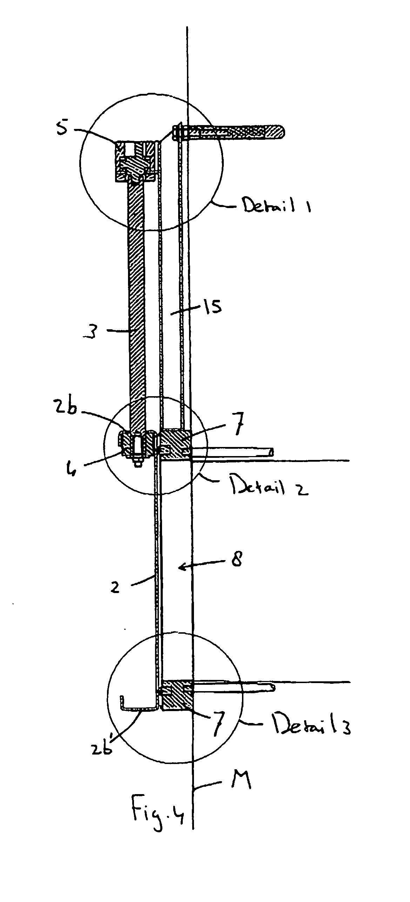

The shutoff 1 represented in Fig. 1 is provided with a sliding plate 2 which is movably arranged. The movement is realized by means of an adjusting mechanism which comprises a spindle 3, a spindle nut 4 and a bearing block 5, with the spindle nut 4 being mounted on an upper edge 2b of the sliding plate 2. The shutoff 1 is further provided with a mounting plate 7 in which a passage opening 8 is provided (see Fig. 4). The passage opening 8 is closed off when the sliding plate 2 is in the closed position and cleared when the sliding plate 2 is in the open position. The mounting plate 7 further serves for guiding the sliding plate 2. To that end, the sliding plate 2 has been flanged on two opposite first longitudinal edges 2a, 2a' in the direction of a first main side of the sliding plate 2 to form a U-shape, which is clearly visible in the top plan view of Fig. 3. The two U-shaped, first longitudinal edges 2a, 2a' embrace the corresponding longitudinal edges 7a, 7a' of the mounting plate 7. At each longitudinal edge 7a, 7a' that serves for guiding the sliding plate 2, the mounting plate 7 is provided with a recess 9, 9', which extends throughout the longitudinal edge of the mounting plate 7, such that a free leg of the U-shaped, first longitudinal edges 2a, 2a' of the sliding plate 2 are slidably receivable in the respective recesses.

The mounting plate 7 is preferably made of plastic, which is of particular advantage from the viewpoint of costs. The sliding plate 2 is preferably manufactured from steel, such as, for instance, stainless steel.

It further appears clearly from Fig. 1 that the other two opposed, second longitudinal edges 2b, 2b' have been flanged to form a U-shape in the direction of a second main side of the sliding plate 2, which is opposite the first main side. This gives the sliding plate 2 enhanced strength without this requiring costly welding operations. Moreover, the upper second longitudinal edge 2b serves for fastening the earlier-mentioned spindle nut 4.. It is incidentally noted that in case of high water pressures or large dimensions of the sliding plate, it may still be necessary, despite the U-shaped flanged longitudinal edges, to weld or otherwise fasten one or more additional strengthening ribs on the sliding plate.

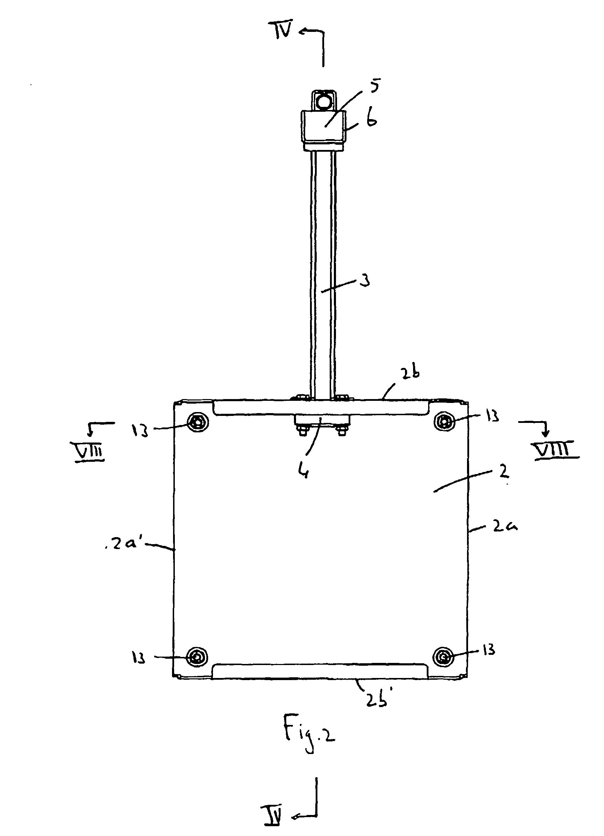

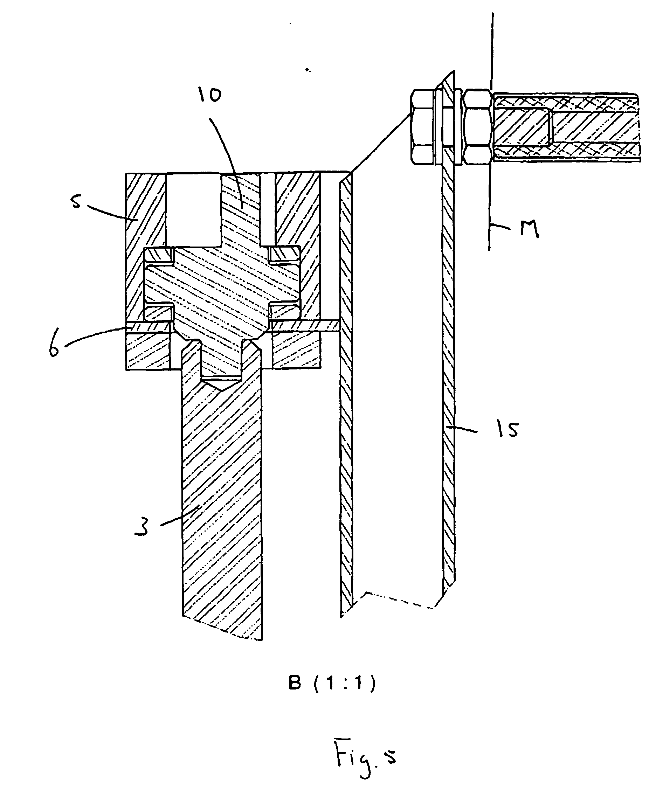

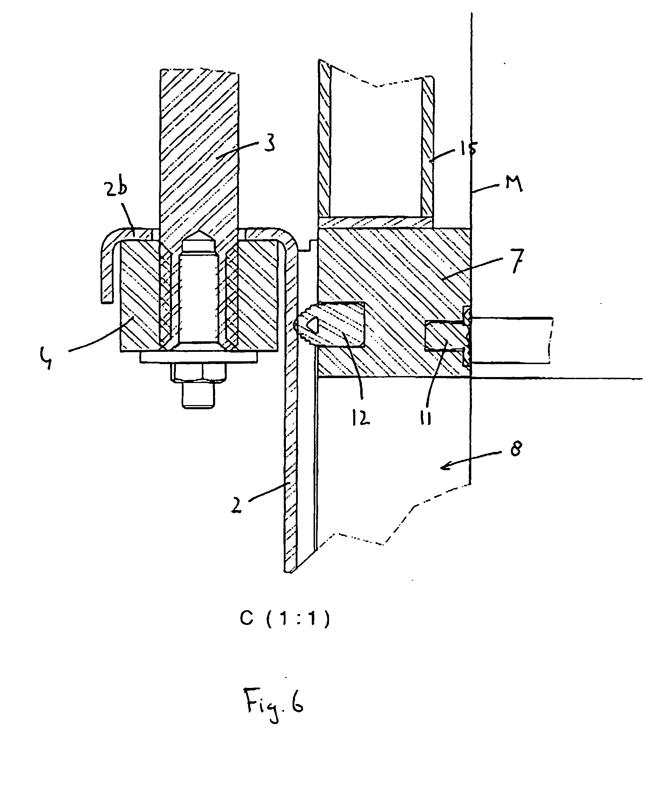

Fig. 4 shows a cross sectional view along line IV-IV from Fig. 2. Specifically the detail 2 which is represented in Fig. 6 shows in what way the screw spindle 3 is connected with the sliding plate 2 via the spindle nut 4. When the spindle 3 is rotated via the operating head 10 (see Fig. 5), the spindle nut 4 will move up or down along the spindle 3. As a result, the sliding plate 2 will move up or down, respectively, while being guided over the mounting plate 7. The operating head 10 is connected with the fixed world by means of a bearing block support 6. The bearing block support 6 is also connected, by means of connecting rod 15, with the mounting plate, which has as a consequence that the bearing block support 6 only needs to be connected to the wall with a single bolt.

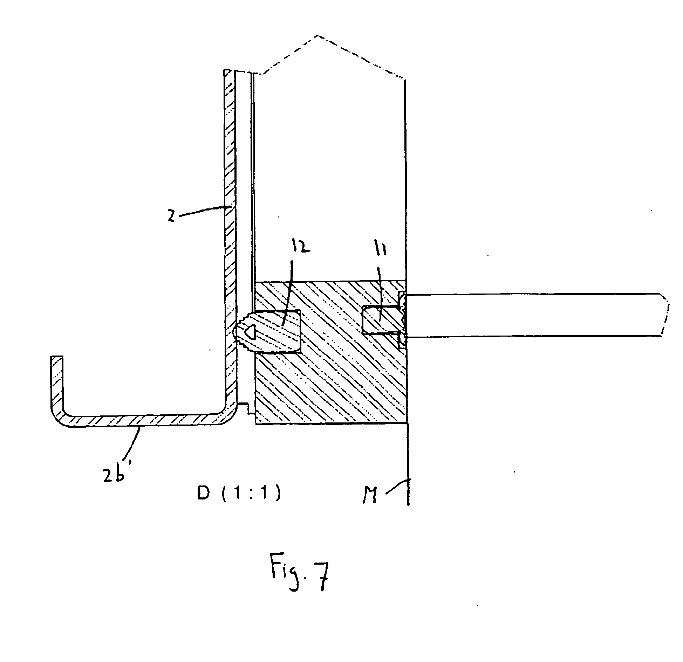

The detail 3 from Fig. 4 which is represented in Fig. 7 shows that in the mounting plate 7 two sealing rubbers 11, 12 are provided for providing, respectively, a sealing 11 between the mounting plate 7 and the wall M, and a sealing 12 between the mounting plate 7 and the sliding plate 2.

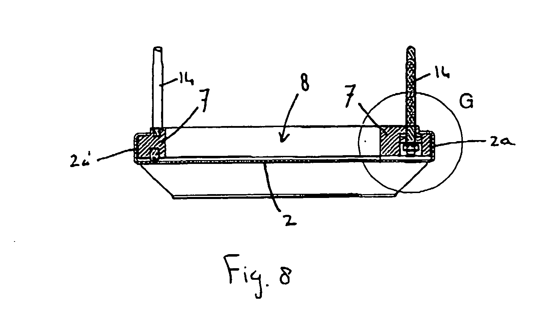

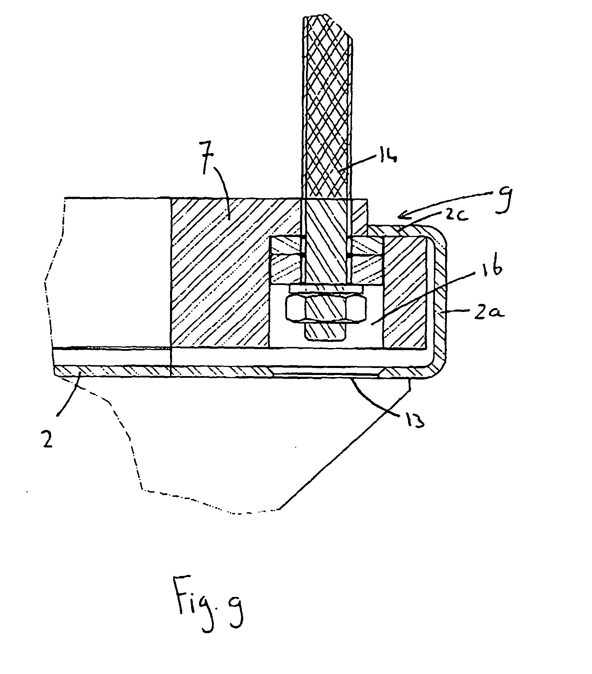

Figs. 1 and 2 show that in the sliding plate 2 four holes 13 are provided at the corners. In a closed position of the sliding plate 2, the holes 13 are in line with four holes in the mounting plate 7 for mounting the mounting plate 7 on a wall M. Accordingly, the shutoff 1 can be transported to its destination site in virtually completely assembled condition and there be mounted on the wall M in a very simple manner. The sliding plate 2 only needs to be set in the closed condition; in the wall, four holes, if not present already, need to be provided, and subsequently the shutoff can be connected to the wall by means of four bolts or chemical anchors. Next, the bearing block support 6 needs to be attached to the wall and the shutoff 1 is ready for use. The connection between the mounting plate 7 and the wall is clearly represented in Figs. 8 and 9, in which it is clearly visualized that the fastening bolt 14 is recessed in the mounting plate 7 in a chamber 16, such that the bolt 14 does not impede the sliding movement of the sliding plate 2. Further, the detail of Fig. 9 also clearly shows once again the recess 9 in which the free leg 2c of the flanged longitudinal edge 2a of the sliding plate 2 is received.

It is clear that the invention is not limited to the exemplary embodiment described, but that various modifications are possible within the framework of the invention, as defined by the claims.

In the exemplary embodiment, the longitudinal edges 2a, 2a', 2b, 2b' have been made U-shaped through a flanging operation. It is also possible, however, to create the U-shape by, for instance, fastening a U-section to the sliding plate adjacent the longitudinal edges.

Further, the applied principle of the mounting plate and the sliding plate with U-shaped longitudinal edges can also be very well applied in an overflow slide. In that case, the passage opening in the mounting plate is not limited by a contour closed upon itself, such as, for instance, a circle, rectangle or triangle, but the passage opening is free at the top. Accordingly, the mounting plate will then be of U-shaped design, with the legs of the U bounding the passage opening on opposite sides, and the base of the U bounding the passage opening on the lower side.

Further, adjustment of the sliding plate can be done, instead of with a screw spindle, with a different adjusting mechanism, such as, for instance, a gear rack, a pneumatic or hydraulic cylinder, a chain, a winch or the like. The adjusting mechanism can also be connected with a side of the sliding plate instead of with the middle of the top. Further, the adjusting mechanisms can be made of double design.

## Claims

1. A device for shutting off or regulating a medium flow, such as, for instance, a shutoff or an overflow slide, provided with a sliding plate (2) which is movably arranged and which is connected with an adjusting mechanism (3, 4, 5) by means of which the sliding plate (2) can be set in different positions, wherein the device is further provided with a mounting plate (7) in which a passage opening (8) is provided, of which passage opening (8) the passage area can be shut off or regulated with the sliding plate (2), while the mounting plate (7) further serves for guiding the sliding plate (2), **characterized in that** to the end that the mounting plate further serves for guiding the sliding plate the sliding plate (2) is U-shaped at two opposed, first longitudinal edges (2a, 2a'), the two U-shaped parts embracing the corresponding longitudinal edges (7a, 7a') of the mounting plate (7).

2. A device according to claim 1, wherein the other two opposed, second longitudinal edges (2b, 2b') of the sliding plate (2) are U-shaped, the U-shaped parts of the first longitudinal edges (2a, 2a') being situated on a first main side of the sliding plate and the U-shaped parts of the second longitudinal edges (2b, 2b') being situated on a second main side of the sliding plate (2), opposite the first main side.

3. A device according to claim 1 or 2, wherein the U-shaped longitudinal edges (2a, 2a', 2b, 2b') have been formed by means of a flanging operation.

4. A device according to any one of claims 1-3, wherein one of the second U-shaped longitudinal edges (2b) is connected with the adjusting mechanism (3, 4, 5), which adjusting mechanism is connectable through another end thereof with the fixed world.

5. A device according to any one of the preceding claims, wherein the adjusting mechanism comprises a screw spindle (3) which is connected via a spindle nut (4) with the sliding plate (2), while a bearing block (5) is fixedly connectable with the fixed world.

6. A device according to claim 5, wherein the bearing block (5) is included in a bearing block support (6) which is connectable with the fixed world.

7. A device according to claim 6, wherein the bearing block support (6) is further connected with the mounting plate (7) via a rod or profile (15).

8. A device according to any one of the preceding claims, wherein the mounting plate (7), at each longitudinal edge (7a, 7a') corresponding to the first longitudinal edges (2a, 2a') of the sliding plate (2), on a side remote from the sliding plate (2), is provided with a recess (9) which extends throughout the longitudinal edge (7a, 7a') of the mounting plate (7), such that a free leg (2c) of the U-shaped longitudinal edges (2a, 2a') of the sliding plate (2) is slidably receivable in the respective recesses (9).

9. A device according to any one of the preceding claims, wherein in the sliding plate (2) four holes (13) are provided at the corners, which holes in a closed position of the sliding plate (2) are in line with four holes in the mounting plate (7) for the purpose of fastening the mounting plate (7) to a wall with the aid of fastening bolts or fixing cramps. (14).

## Patentansprüche

1. Vorrichtung zum Absperren oder Regeln eines Medienstroms, wie beispielsweise ein Absperr- oder ein Überlaufschieber, versehen mit einer Schiebeplatte (2), die bewegbar angeordnet und mit einem Verstellmechanismus (3,4,5) verbunden ist, mit dem die Schiebeplatte (2) in unterschiedliche Positionen gesetzt werden kann, wobei die Vorrichtung ferner eine Befestigungsplatte (7) aufweist, in der eine Durchgangsöffnung (8) vorgesehen ist, deren Durchlassfläche mit der Schiebeplatte (2) abgesperrt oder geregelt werden kann, wobei die Befestigungsplatte (7) ferner zum Führen der Schiebeplatte (2) dient,
**dadurch gekennzeichnet, dass**
zu diesem Zweck die Befestigungsplatte ferner zum Führen der Schiebeplatte dient, die Schiebeplatte (2) an zwei entgegengesetzten ersten Längsrändern (2a,2a') U-förmig ausgebildet ist und die zwei U-förmigen Teile die entsprechenden Längsränder (7a,7a') der Befestigungsplatte (7) umgreifen.

2. Vorrichtung nach Anspruch 1, bei der die anderen zwei entgegengesetzten zweiten Längsränder (2b,2b') der Schiebeplatte (2) U-förmig ausgebildet sind, wobei die U-förmigen Teile der ersten Längsränder (2a, 2a') auf einer ersten Hauptseite der Schiebeplatte angeordnet sind und die U-förmigen Teile der zweiten Längsränder (2b,2b') auf einer der ersten Hauptseite gegenüberliegenden zweiten Hauptseite der Schiebeplatte (2) angeordnet sind.

3. Vorrichtung nach Anspruch 1 oder 2, bei der die U-förmigen Längsränder (2a,2a',2b,2b') mittels einer Bördeloperation ausgebildet worden sind.

4. Vorrichtung nach einem der Ansprüche 1-3, bei der einer der zweiten U-förmigen Längsränder (2b) mit dem Verstellmechanismus (3,4,5) verbunden ist, der über ein weiteres Ende mit einem feststehenden Teil verbindbar ist.

5. Vorrichtung nach einem der vorhergehenden Ansprüche, bei der der Verstellmechanismus eine Schraubenspindel (3) aufweist, die über eine Spindelmutter (4) mit der Schiebeplatte (2) verbunden ist, während ein Lagerblock (5) fest mit einem feststehenden Teil verbindbar ist.

6. Vorrichtung nach Anspruch 5, bei der der Lagerblock (5) in einem Lagerblockträger (6) aufgenommen ist, der mit einem feststehenden Teil verbindbar ist.

7. Vorrichtung nach Anspruch 6, bei der der Lagerblockträger (6) ferner über eine Stange oder ein Profil (15) mit der Befestigungsplatte (7) verbunden ist.

8. Vorrichtung nach einem der vorhergehenden Ansprüche, bei der die Befestigungsplatte (7) an jedem Längsrand (7a,7a'), der den ersten Längsrändern (2a,2a') der Schiebeplatte (2) entspricht, auf einer von der Schiebeplatte (2) entfernten Seite eine Ausnehmung (9) aufweist, die durchgehend über den Längsrand (7a,7a') der Befestigungsplatte (7) verläuft, derart, dass ein freies Bein (2c) der U-förmigen Längsränder (2a,2a') der Schiebeplatte (2) gleitbar in den jeweiligen Ausnehmungen (9) aufnehmbar ist.

9. Vorrichtung nach einem der vorhergehenden Ansprüche, bei der in der Schiebeplatte (2) vier Löcher (13) an den Ecken ausgebildet sind, die in einer geschlossenen Position der Schiebeplatte (2) mit vier in der Befestigungsplatte (7) ausgebildeten Löchern ausgerichtet sind zwecks Befestigung der Befestigungsplatte (7) mittels Befestigungsschrauben oder Befestigungsklammern (14) an einer Wand.

## Revendications

1. Dispositif d'arrêt ou de régulation d'un flux de liquide, tel par exemple un tiroir d'arrêt ou de trop-plein, muni d'une plaque coulissante (2), agencée de manière mobile et raccordée à un mécanisme de réglage (3, 4, 5) au moyen duquel la plaque coulissante (2) peut être placée en différentes positions, dans lequel le dispositif comprend en outre une plaque de montage (7) dans laquelle une ouverture de passage (8) est prévue, la zone de passage de cette ouverture de passage (8) pouvant être fermée ou régulée avec la plaque coulissante (2), tandis que la plaque de montage (7) sert en outre au guidage de la plaque coulissante (2), **caractérisé en ce que** pour que la plaque de montage serve en outre au guidage de la plaque coulissante, la plaque coulissante (2) est en forme de U au niveau de deux premiers bords longitudinaux opposés (2a, 2a'), les deux parties en forme de U encerclant les bords longitudinaux correspondants (7a, 7a') de la plaque de montage (7).

2. Dispositif selon la revendication 1, dans lequel les deux seconds bords longitudinaux opposés (2b, 2b') de la plaque coulissante (2) sont en forme de U, les parties en forme de U des premiers bords longitudinaux (2a, 2a') étant situées sur un premier côté principal de la plaque coulissante et les parties en forme de U des seconds bords longitudinaux (2b, 2b') étant situées sur un second côté principal de la plaque coulissante (2), opposé au premier côté principal.

3. Dispositif selon la revendication 1 ou 2, dans lequel les bords longitudinaux en forme de U (2a, 2a', 2b, 2b') ont été formés au moyen d'une opération de bordage.

4. Dispositif selon l'une quelconque des revendications 1 à 3, dans lequel l'un des seconds bords longitudinaux en forme de U (2b) est raccordé au mécanisme de réglage (3, 4, 5), ce mécanisme de réglage pouvant être raccordé par une autre extrémité à l'environnement fixe.

5. Dispositif selon l'une quelconque des revendications précédentes, dans lequel le mécanisme de réglage comprend un arbre fileté (3) qui est raccordé à la plaque coulissante (2) par l'intermédiaire d'un écrou de réglage (4), tandis qu'un corps de palier (5) peut être raccordé de manière fixe à l'environnement fixe.

6. Dispositif selon la revendication 5, dans lequel le corps de palier (5) est compris dans un support de corps de palier (6) qui peut être raccordé à l'environnement fixe.

7. Dispositif selon la revendication 6, dans lequel le support de corps de palier (6) est en outre raccordé à la plaque de montage (7) par l'intermédiaire d'une tige ou d'un profilé (15).

8. Dispositif selon l'une quelconque des revendications précédentes, dans lequel la plaque de montage (7), au niveau de chaque bord longitudinal (7a, 7a') correspondant aux premiers bords longitudinaux (2a, 2a') de la plaque coulissante (2), d'un côté éloigné de la plaque coulissante (2), est munie d'un évidement (9) qui s'étend à travers le bord longitudinal (7a, 7a') de la plaque de montage (7), de sorte qu'une patte libre (2c) des bords longitudinaux en forme de U (2a, 2a') de la plaque coulissante (2) soit reçue de manière coulissante dans l'évidement respectif (9).

9. Dispositif selon l'une quelconque des revendications précédentes, dans lequel quatre orifices (13) sont prévus au niveau des coins dans la plaque coulissante (2), ces orifices étant alignés avec quatre orifices dans la plaque de montage (7), lorsque la plaque coulissante (2) est dans une position fermée, afin de fixer la plaque de montage (7) à une paroi à l'aide de boulons de fixation ou de crampons de fixation (14).
